# EUROPÄISCHE PATENTSCHRIFT

(11) **EP 2 467 734 B1**
(45) Veröffentlichungstag und Bekanntmachung des Hinweises auf die Patenterteilung: **20.04.2016**
(21) Anmeldenummer: 10739643.4
(22) Anmeldetag: 06.08.2010
(51) Int. Cl.: G01S 19/49, G01C 21/30, B60W 50/08

(54) **VERFAHREN UND STEUERGERÄT ZUR DETEKTIEREN EINEN FAHRSPURWECHSEL EINES FAHRZEUGS UND ZUR AKTIEVIERUNG EINES INSASSENSCHUTZMITTELS**
METHOD AND CONTROL DEVICE FOR DETECTING THE CHANGE IN LANE OF A VEHICLE AND FOR ACTIVATING A PASSENGER PROTECTION
PROCÉDÉ ET APPAREIL DE COMMANDE PERMETTANT DE DÉTECTER UN CHANGEMENT DE VOIE D' UN VÉHICULE ET D' ACTIVER UN MOYEN DE PROTECTION DES OCCUPANTS

(30) Priorität: 21.08.2009 DE 102009028813
(43) Veröffentlichungstag der Anmeldung: 27.06.2012
(73) Patentinhaber: Robert Bosch GmbH, 70442 Stuttgart (DE)
(72) Erfinder: WELLHOEFER, Matthias Marcus, 70499 Stuttgart (DE); GEIGER, Johannes, 70839 Gerlingen (DE)
(86) Internationale Anmeldenummer: PCT/EP2010/061498
(87) Internationale Veröffentlichungsnummer: WO 2011/020716

(56) Entgegenhaltungen:
- EP-A1- 1 256 782
- WO-A1-2006/037445

## Beschreibung

### Stand der Technik

Die vorliegende Erfindung bezieht sich auf ein Verfahren gemäß Anspruch 1, ein Steuergerät gemäß Anspruch 9, sowie ein Computerprogrammprodukt gemäß Anspruch 10.

Um eine Erhöhung der Sicherheit der Insassen eines Kraftfahrzeugs zu erreichen, werden immer bessere Sicherheitssysteme erforderlich. Beispielsweise können frühzeitig aktivierte Gurtstraffer einen Insassen in einer optimalen Sitzposition halten, so dass die Auslösung eines Airbags dann eine wesentlich größere Schutzwirkung entfaltet, als wenn der Insasse beispielsweise seitlich von dem Sitz weggeneigt ist. Aus diesem Grund kommt bereits der Erkennung des Verlassens einer Fahrspur durch das eigenen Fahrzeug eine hohe Bedeutung zu, das bei einem Verlassen der Fahrspur schon frühzeitig Sicherheitsmittel aktiviert werden können, die ein deutliches Mehr an globaler Sicherheit bringen. Um einen Fahrspurwechsel zu erkennen, können verschiedene Systeme eingesetzt werden.

Um jedoch möglichst wenige zusätzliche Sensoren zur Erkennung eines Fahrspurwechsels verwenden zu müssen, die noch dazu keinen wertvollen Bauraum belegen sollten, sollten günstigerweise bereits vorhandene Sensorsignale weiterverwendet werden. Hierzu kann auf bereits im Fahrzeug verbaute Systeme zurückgegriffen werden.

Passive Sicherheitssysteme in Kraftfahrzeugen verfügen heute meist über eine Front-, Seiten-, Heck- und Rollover- (d.h. Fahrzeugüberschlag-) Sensierung mit den zugehörigen Auslösealgorithmen. Auch die Verwendung von aktiven Fußgängerschutzkomponenten (beispielsweise mit Beschleunigungssensoren im Bumper d.h. der Stoßstange) ist bekannt. Lane-Departure Warning- (LDW = Fahrspurverlassenswarnungs-) und Lane-Keeping-Assist- (LKA = Fahrspurhalteassistenz-) Systeme oder andere Spurhalteassistenzfunktionen sind ebenfalls bereits bekannt und im Einsatz. Typischerweise basieren diese Systeme jedoch auf (teuren) optischen Sensoren, wie (Video-) Kameras, welche einen teilweise großen Bauraum im Fahrzeug, speziell im Rückspiegelbereich und damit im Sichtbereich des Fahrers erfordern. Die Verwendung eines Satellitennavigationssystems wie GPS (GPS = Global Positioning System = Globales Positionierungssystem) im Fahrzeug ist ebenfalls bekannt und für den Einsatz als Navigationshilfe und für zukünftige Car-to-X-Kommunikationseinheiten (z.B. bei der Einführung von eCall) immer weiter verbreitet. Aus dem Bereich der Airbag-Technologie sind zentrale Inertialsensoren bekannt, die beispielsweise auf dem Tunnel verbaut sind und die die Bewegung des Fahrzeugs durch die auf das Fahrzeug wirkenden Beschleunigungen vollständig erfassen. Aus dem Navigationsbereich ist ferner digitales Kartenmaterial mit einer sehr guten Auflösung und sehr viel Zusatzinformation bekannt.

Eine Möglichkeit zur Bestimmung der Position eines Fahrzeugs auf einer Fahrbahn ist in der WO 2001050088 aufgezeigt, in der ein differentielles GPS-System zur Bestimmung einer exakten geographischen Position des Fahrzeugs auf der Fahrbahn eingesetzt wird. Die Verwendung eines differentiellen GPS erfordert jedoch einen erhöhten Aufwand durch die Verwendung von unterschiedlichen GPS-Empfängern und der entsprechend komplizierten Auswertung. Auch in der DE 10349631 ist ein ähnliches System dargestellt, jedoch unter Verwendung eines Bildes von einem optischen Sensor, was jedoch das Vorhalten eines entsprechenden optischen Sensors bedingt.

Die WO 2006/037445 A1 offenbart ein Verfahren und eine Vorrichtung zur Fahrerwarnung oder zum aktiven Eingreifen in die Fahrdynamik, falls ein Verlassen der Fahrspur droht.

Die EP 1 256 782 A1 offenbart eine Navigationsvorrichtung, in der ein GPS-Signal und ein Beschleunigungssensorsignal verwendet werden.

### Offenbarung der Erfindung

Vor diesem Hintergrund wird mit der vorliegenden Erfindung ein Verfahren, weiterhin ein Steuergerät, das dieses Verfahren verwendet sowie schließlich ein entsprechendes Computerprogrammprodukt gemäß den unabhängigen Patentansprüchen vorgestellt. Vorteilhafte Ausgestaltungen ergeben sich aus den jeweiligen Unteransprüchen und der nachfolgenden Beschreibung.

Die vorliegende Erfindung schafft ein Verfahren zur Bestimmung einer Position eines Fahrzeugs auf einer Fahrbahn, wobei das Verfahren die folgenden Schritte aufweist:
- Empfangen von Fahrzeuggrobkoordinaten aus zumindest einem empfangenen Satellitensignal, wobei die Fahrzeuggrobkoordinaten alleine aus Signalen von einem oder mehreren Satelliten eines Satellitenortungssystems bestimmt wurden;;
- Erhalten eines Inertialsignals, das eine Beschleunigung des Fahrzeugs im Wesentlichen horizontal zur Fahrbahn repräsentiert; und
- Ermitteln von Fahrzeugfeinkoordinaten lediglich aus den empfangenen Fahrzeuggrobkoordinaten und dem erhaltenen Inertialsignal, um die Fahrzeugfeinkoordinaten zur Bestimmung der Position des Fahrzeugs auf der Fahrbahn zu verwenden.

Die vorliegende Erfindung schafft ferner ein Steuergerät, das ausgebildet ist, um die Schritte des erfindungsgemäßen Verfahrens durchzuführen bzw. umzusetzen. Auch durch diese Ausführungsvariante der Erfindung in Form eines Steuergeräts kann die der Erfindung zugrunde liegende Aufgabe schnell und effizient gelöst werden.

Unter einem Steuergerät kann vorliegend ein elektrisches Gerät verstanden werden, das Sensorsignale verarbeitet und in Abhängigkeit davon Steuersignale ausgibt. Das Steuergerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Steuergeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung des Verfahrens nach einem der vorstehend beschriebenen Ausführungsformen verwendet wird, wenn das Programm auf einem Steuergerät ausgeführt wird.

Die vorliegende Erfindung bietet den Vorteil, dass bereits im Fahrzeug vielfach verfügbare Signale vorteilhaft kombiniert werden können und so ein zusätzlicher Nutzen dieser Signale entsteht. Hierzu kann ausgenutzt werden, dass oftmals bereits Beschleunigungssensoren im Fahrzeug verbaut sind, deren Signale beispielsweise zu Auslösung eines Gurtstraffers, eines Airbags oder eines anderen Insassenschutzmittels verwendet werden. Die heutzutage verbauten Beschleunigungssensoren liefern dabei sehr präzise Messwerte der auftretenden Beschleunigungen, von denen insbesondere die Beschleunigungen horizontal zur Fahrbahn zur Bestimmung einer genauen Position des Fahrzeugs weiterverwendet werden können. Hierzu wird zunächst als Referenzposition (d.h. als Fahrzeuggrobposition) die Position des Fahrzeugs mit einem satellitengestützten Navigationssystem, beispielsweise GPS, bestimmt, wobei diese Referenzposition jedoch nicht ausreichend genau zur Bestimmung der Position des Fahrzeugs auf der Fahrbahn ist. Die satellitengestützte Bestimmung der Referenzposition weist nämlich eine Ungenauigkeit im Bereich von 10 bis 30 m auf, so dass eine Fahrspurerkennung durch eine solche Referenzposition nicht eindeutig möglich ist. Eine signifikante Verbesserung der durch das Navigationssystem bestimmten (Referenz-) Position kann dann unter Berücksichtigung der bereits zur Verfügung stehenden Beschleunigungswerte erfolgen, wobei Prinzipien aus der Trägheitsnavigation zur Bestimmung der korrigierten Position (d.h. der Fahrzeugfeinposition) des Fahrzeug auf der Fahrbahn angewandt werden können. Auf diese Weise lässt sich eine deutlich präzisere Positionsangabe des Fahrzeugs auf der Fahrbahn erreichen, die eine Genauigkeit von 1 bis 5 cm aufweist. Eine solche Genauigkeit ermöglicht dann beispielsweise die Fahrspurerkennung, wenn die präzise (Fein-) Positionsangabe mit den Daten aus einer digitalen Karte verglichen werden.

Die vorliegende Erfindung bietet den Vorteil, dass nun aus wenigen, bereits verfügbaren Signalen eine sehr präzise Positionsangabe des Fahrzeugs auf der Fahrbahn möglich wird, die eine Fahrspurerkennung und/oder gar einen Fahrspurwechsel ermöglicht. Unter einem "Fahrspurwechsel" können in dieser Beschreibung neben dem herkömmlichen Fahrspurwechsel beispielsweise auch noch eine Fahrbahnüberschreitung oder ein Verlassen der Fahrbahn verstanden werden. Neben den genannten Beschleunigungssensoren, die ja bereits für die Auslösung von Sicherheitssystemen verfügbar sind, ist lediglich die Bereitstellung von Signalen aus einem satellitengestützten Navigationssystem erforderlich. Derartige Signale liegen bei modernen Fahrzeugen durch die serienmäßig verbauten Navigationsgeräte ebenfalls bereits vor. Wird nun die bestimmte hochgenaue geographische Position des Fahrzeugs mit digitalen Kartendaten verglichen, die ebenfalls aus dem Navigationsgerät oder einem anderen digitalen Kartenspeicher zur Verfügung gestellt werden können, lässt sich sehr einfach ein Fahrspurwechsel erkennen. Entsprechende Sicherheitsfunktionen können dann frühzeitig aktiviert werden. Hierzu sind dann beispielsweise keine optischen Sensoren zur Erkennung von Fahrbahnmarkierungen erforderlich. Auf diese Weise wird einerseits die Bereitstellung von zusätzlichen Sensoren für die Erhöhung der Sicherheit nicht unbedingt notwendig und andererseits wird eine sehr einfache Datenverarbeitung möglich, da nur eine geringe Anzahl von Signalen (d.h. die Navigationsdatensignale und die Inertialsignale) zu verknüpfen ist. Zugleich kann durch die schnelle Bereitstellung der Inertialsignale eine sehr schnelle Nachverfolgung der Fahrstrecke des Fahrzeugs erfolgen, wobei nicht auf die zeitintensive Auswertung der nachfolgenden Navigationssignale des Ortungssatelliten gewartet werden zu braucht.

Gemäß einer weiteren Ausführungsform der Erfindung kann im Schritt des Detektierens ein Unterschritt enthalten sein, in dem eine Warnung an einen Fahrer ausgegeben wird, wenn ein Fahrspurwechsel erkannt wird. Eine derartige Ausführungsform der vorliegenden Erfindung bietet den Vorteil, dass der Fahrer über einen unbeabsichtigten Fahrspurwechsel (beispielsweise beim Auftreten eines Sekundenschlafs) gewarnt wird und durch ein rechtzeitiges Eingreifen des Fahrers möglicherweise eine Fahrzeugkollision verhindert werden kann.

Besonders vorteilhaft ist es auch, wenn ferner ein Schritt des Aktivierens eines Insassenschutzmittels vorgesehen ist, wenn oder nachdem im Schritt des Detektierens ein Fahrspurwechsel tatsächlich detektiert wird. Eine derartige Ausführungsform der vorliegenden Erfindung bietet nicht nur den Vorteil eine Erkennung eines Fahrspurwechsels mit wenigen Signalen zu ermöglichen sondern zusätzlich zumindest ein Insassenschutzmittel in eine erhöhte Alarmbereitschaft zu versetzen. Hierdurch wird es möglich, frühzeitig vor einem tatsächlichen Einschlag eines Objektes in das Fahrzeug beispielsweise geeignete Langzeit-aktive Sicherheitsmittel wie einen Gurtstraffer oder einen seitlichen Curtain-Airbag rechtzeitig vor einer Fahrzeugkollision zu aktivieren. Diese frühzeitige Aktivierung hält einen Insassen des Fahrzeugs in einer Position, in der beispielsweise bei einem später erfolgenden Aufprall eines Objekts auf das Fahrzeug ein Kurzzeitaktives Sicherheitsmittel wie ein Front-Airbag eine optimale Schutzwirkung entfalten kann.

Besonders vorteilhaft ist es, wenn im Schritt des Aktivierens dieses Aktivieren durch ein Verändern einer Auslöseschwelle für das Insassenschutzmittel und/oder durch eine Freigabe für eine Auslösung des Insassenschutzmittels erfolgt. Üblicherweise ist es für die Auslösung der Insassenschutzmittel erforderlich, dass ein Signal oder ein Signalwert eine Auslöseschwelle für dieses Insassenschutzmittel überschreitet. Diese Auslöseschwelle sollte so hoch sein, dass Fahrzeugerschütterungen, die im normalen Fahrbetrieb auftreten, nicht zu Auslösung des Insassenschutzmittels führen. Wird jedoch ein Fahrspurwechsel erkannt, kann dies als Hinweis für eine unmittelbar bevorstehende Fahrzeugkollision gewertet werden, so dass nun eine hohe Auslöseschwelle nicht mehr erforderlich ist, oder dass die Auslösung des Insassenschutzmittels komplett freigegeben werden kann. Eine solche Freigabe kann beispielsweise dadurch erfolgen, dass bei einem Eintreffen eines weiteren Auslösesignals das Insassenschutzmittel aktiviert oder ausgelöst wird, ohne dass zuvor eine nochmalige Plausibilisierung dieser Auslösung erforderlich ist.

Ferner kann auch im Schritt des Detektierens ein Fahrspurwechsel in eine Fahrspur erkannt werden, die für Verkehr in einer zur Fahrtrichtung des Fahrzeugs entgegengesetzten Richtung freigegeben ist und wobei im Schritt des Aktivierens ein Insassenschutzmittel zum Schutz zumindest eines Insassen gegen einen Frontaufprall aktiviert wird. Eine derartige Ausführungsform der vorliegenden Erfindung bietet den Vorteil, dass beispielsweise speziell ein Frontairbag aktiviert werden kann, wenn das Fahrzeug in eine Fahrspur für den Gegenverkehr gerät. In einer derartigen Situation wird mit deutlich größerer Wahrscheinlichkeit einen Frontalaufprall als ein Seitenaufprall auftreten, so dass in dieser Situation durch die Aktivierung eines Insassenschutzmittels zum Schutz zumindest eines Insassen an gegen einen Frontaufprall ein deutliches Plus an Sicherheit erreicht werden kann.

Auch kann im Schritt des Detektierens ein Fahrspurwechsel von einer Fahrbahn in einen Fahrbahnseitenbereich erkannt werden und wobei im Schritt des Aktivierens ein Insassenschutzmittel zum Schutz zumindest eines Insassen gegen einen Seitenaufprall oder einen Fahrzeugüberschlag aktiviert werden kann. Eine derartige Ausführungsform der vorliegenden Erfindung bietet den Vorteil, dass beim Eintritt des Fahrzeugs in einen Fahrbahnseitenbereich, beispielsweise einen Böschungsbereich oder einen sandigen Seitenstreifen, mit größerer Wahrscheinlichkeit ein Schleudern des Fahrzeugs, eine Seitenkollision oder ein Fahrzeugüberschlag auftreten wird, als eine Frontkollision. Durch die Aktivierung von entsprechenden Sicherheitsmitteln kann somit gegenüber einer unspezifizierten Aktivierung von Insassenschutzmitteln ein deutlicher Gewinn an Insassensicherheit erreicht werden.

Auch kann ferner ein Schritt des Parametrierens eines aktiven Fußgängerschutzsystems vorgesehen sein, wenn im Schritt des Detektierens eine Fahrspurwechsels des Fahrzeugs in einen Fußgängerbereich oder einen Radfahrerbereich vorgesehen ist, wobei der Koordinaten des Fußgängerbereichs oder des Radfahrerbereichs im Schritt des Auslesens aus einer digitalen Straßenkarte erhalten werden. Eine derartige Ausführungsform der Erfindung bietet den Vorteil, dass ein hohes Verletzungsrisiko für die Personen im Fußgängerbereich oder im Radfahrerbereich durch die Auslösung oder die Parametrisierung des aktiven Fußgängerschutzsystems vermieden werden kann. Dieses Fußgängerschutzsystem kann beispielsweise ein Aufklappen der Motorhaube umfassen, wodurch ein heftiger Stoß des Fußgängers auf die Windschutzscheibe vermieden werden kann.

Die Erfindung wird anhand der beigefügten Zeichnungen beispielhaft näher erläutert. Es zeigen:
- Fig. 1: ein Blockschaltbild eines ersten Ausführungsbeispiels der vorliegenden Erfindung; und
- Fig. 2: ein Ablaufdiagramm eines weiteren Ausführungsbeispiels der Erfindung als Verfahren.

Gleiche oder ähnliche Elemente können in den Figuren durch gleiche oder ähnliche Bezugszeichen versehen sein, wobei auf eine wiederholte Beschreibung dieser Bezugszeichen verzichtet wird. Ferner enthalten die Figuren der Zeichnungen, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht explizit beschriebenen Kombinationen zusammengefasst werden können. Weiterhin ist die Erfindung in der nachfolgenden Beschreibung unter Verwendung von unterschiedlichen Maßen und Dimensionen erläutert, wobei die Erfindung nicht auf diese Maße und Dimensionen eingeschränkt zu verstehen ist. Ferner können erfindungsgemäße Verfahrensschritte wiederholt sowie in einer anderen als in der beschriebenen Reihenfolge ausgeführt werden. Umfasst ein Ausführungsbeispiel eine "und/oder" Verknüpfung zwischen einem ersten Merkmal und einem zweites Merkmal, so kann dies so gelesen werden, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist

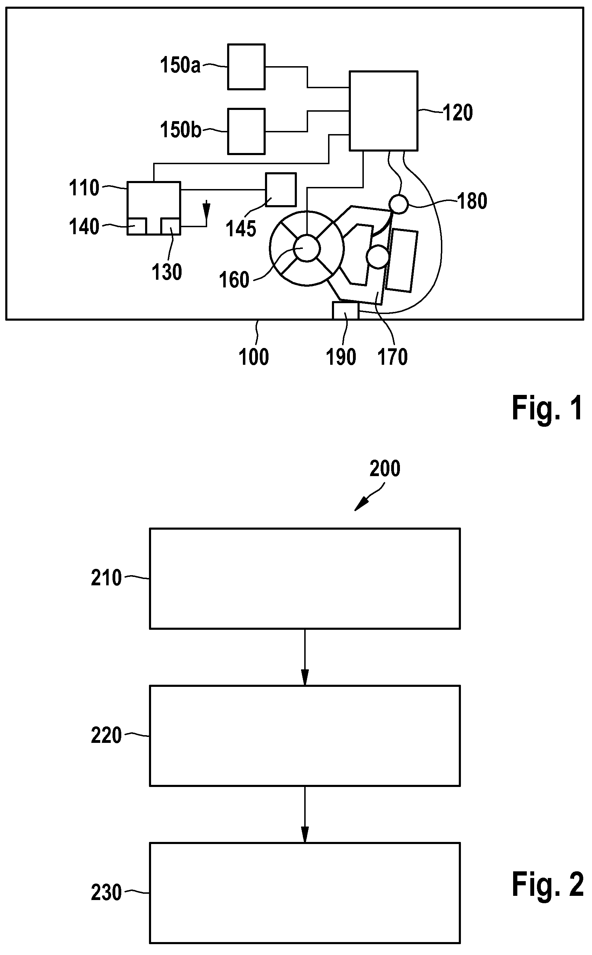

Fig.1 zeigt ein Blockschaltbild eines ersten Ausführungsbeispiels der vorliegenden Erfindung. Hierbei ist ein Fahrzeug 100 in Fig. 1 dargestellt, welches ein Navigationsgerät 110 und ein Airbag-Steuergerät 120 aufweist.

Das Navigationsgerät 110 umfasst eine Empfangseinheit 130, die zum Empfang von Signalen eines Navigationssatelliten (wie beispielsweise eines GPS-Satelliten) ausgebildet ist. Weiterhin weist das Navigationsgerät 110 einen Speicher 140 auf, in dem zumindest eine digitale Karte gespeichert ist. Die digitale Karte ist dabei vorzugsweise derart präzise, dass einzelne Fahrspuren der in der digitalen Karte vermerkten Straßen zusammen mit den jeweils entsprechenden geographischen Positionen dieser Fahrspuren gespeichert sind. Unter Verwendung der von zumindest einem Navigationssatelliten empfangenen Signale kann nun eine geographische Position des Fahrzeugs 100 bestimmt und die entsprechende Position in der digitalen Karte nachgeschlagen werden, die im Speicher 140 gespeichert ist. Ein entsprechender Ausschnitt der digitalen Karte, der der bestimmten geographischen Position des Fahrzeugs 100 zugeordnet ist, kann auf einer Anzeigeeinheit 145 für einen Fahrer des Fahrzeugs 100 angezeigt werden. Dies ist die übliche Funktionalität eines Navigationsgeräts.

Das Airbag-Steuergerät 120 ist ausgebildet, um Signale von Beschleunigungssensoren wie beispielsweise den Sensoren 150a und 150b zu empfangen und auszuwerten. Ansprechend auf die Signale von den Sensoren 150a und 150b (entweder einzeln oder in Kombination) kann ein Airbag 160, beispielsweise im Bereich des Lenkrads vor einem Fahrzeuginsassen 170 aktiviert werden. In diesem Fall kann der Airbag 160 den Insassen 170 gegen einen Frontalaufprall schützen. Alternativ oder zusätzlich kann das Airbag-Steuergerät 120 auch ausgebildet sein, um weitere Insassenschutzmittel wie beispielsweise einen Gurtstraffer 180 oder einen Seitenairbag 190 auszulösen, so dass das Airbag-Steuergerät 120 auch allgemein als Insassenschutzmittelsteuergerät aufgefasst werden kann. Ein derartiges Insassenschutzmittelsteuergerät 120 ist bereits in den heute verfügbaren Fahrzeugen serienmäßig verbaut.

Gemäß einem Ausführungsbeispiel der Erfindung kann nun das Navigationsgerät 110 mit dem Insassenschutzmittelsteuergerät 120 gekoppelt werden, so dass dem Insassenschutzmittelsteuergerät 120 zumindest die Information über die aktuelle die geographische Position des Fahrzeugs 100 mitgeteilt wird, die mit Hilfe des zumindest einen Signals eines Navigationssatelliten bestimmt wurde. Eine derart bestimmte geographische (Grob-) Position hat eine Präzision von 10 bis 30 m, was für die Erkennung einer Fahrspur, auf der sich das Fahrzeug 100 auf der Fahrbahn gerade befindet, zu ungenau ist. Eine deutliche Erhöhung der Präzision kann jedoch durch die Auswertung der Beschleunigungssignale erfolgen, die im Insassenschutzmittelsteuergerät 120 vorliegen und von den Sensoren 150a und/oder 150b geliefert wurden. Mit Hilfe eines solchen Sensorsignals, das zumindest eine horizontale Beschleunigungskomponente enthält (d.h. eine Komponenten enthält, die im Wesentlichen horizontal zur Fahrbahn ausgerichtet ist) kann eine sehr schnelle und einfache Nachverfolgung des Fahrwegs des Fahrzeugs 100 durchgeführt werden. Es braucht daher einerseits nicht mehr auf die Auswertung der Signale vom Navigationssatelliten in dem Navigationsgerät 110 gewartet werden, um eine Fahrzeugbewegung zu erkennen und andererseits kann durch die Auswertung der präzise erfassten Fahrzeugbeschleunigungen eine deutliche präzisere Bestimmung der Position des Fahrzeugs 100 auf der Fahrbahn durchgeführt werden, als dies unter Zuhilfenahme von anderen Sensorsignalen möglich ist.

Ferner kann auch eine Kalibrierung der Fahrzeugposition an Hand der Straßenverlaufsdaten aus der digitalen Straßenkarte erfolgen, wenn fortlaufend (beispielsweise über einen Zeitraum von einer oder zwei Minuten) ein Abgleich der geographischen Positionen zwischen der vom Fahrzeug 100 gefahrenen Strecke mit der bestimmten geographischen Position des Fahrzeugs durchgeführt wird. Würde eine unpräzise Einstellung der erkannten Position zu Beginn der Fahrt (das heißt im Präzisionsbereich von 10 bis 30 m) über eine längere Fahrtstrecke beibehalten, so würde dies mit hoher Wahrscheinlichkeit dazu führen, dass dem Fahrzeug 100 im Beobachtungszeitraum zumindest kurzzeitig eine geographische Position zugeordnet würde, die sich außerhalb desjenigen Koordinatenbereichs befindet, der in der digitalen Karte als "Fahrschlauch" für die Straße hinterlegt ist. Durch eine derartige Abweichung zwischen einer bestimmten geographischen Position und der tatsächlich gefahren Strecke, die ja tatsächlich nicht aufgetreten ist, kann dann die Kalibrierung d.h. die Korrektur eines Offsets der geographischen Feinpositionierung für die nachfolgenden weiteren Fahrtabschnitte durchgeführt werden. Auch kann eine Speicherfunktion vorgesehen sein und aktiviert werden, wenn das Fahrzeug außer Betrieb gesetzt wird, so dass in diesem Speicher eine kalibrierte und hochgenaueaktuelle Position für die Verwendung bei der Ortsbestimmung in späteren Fahrten abgelegt wird.

Ferner kann auch in Abhängigkeit von einem erkannten Fahrspurwechsel eine Veränderung der Auslöseschwelle für die Auslösung der Airbags oder der weiteren Personensicherheitsmittel vorgenommen werden. Dies ermöglicht eine Verbesserung der Frühwarnung vor einer Fahrzeugkollision, da ein früher Hinweis auf eine Gefahrensituation, beispielsweise die Fahrt in den Gegenverkehr oder die Fahrt auf eine Böschung zu, vor dem eigentlichen Auftreten dieser Situation aus der digitalen Straßenkarte erkannt werden kann, ohne dass dies möglicherweise für andere Sensoren bereits zu einem derartigen Zeitpunkt schon erkennbar wäre.

Das vorstehend beschriebene Ausführungsbeispiel der Erfindung nutzt somit die Kombination von eigener Crash- und Fahrdynamiksensorik mit differentialem GPS und digitalem Kartenmaterial, um beispielsweise eine noch bessere Vorkonditionierung der Insassenschutzeinrichtungen und der situationsgerechten Algorithmus-Parametrisierung zu bieten, wodurch sich ein verbesserter Insassenschutz erreicht werden kann.

Ein weiterer Aspekt der Erfindung besteht darin, einen Spurhalteassistenten oder eine Spurwarnfunktion wie beispielsweise ein LDW- / LKA-System ohne den Verbau von zusätzlicher Sensorik wie Kameras zu realisieren und damit signifikant Kosten zu sparen. Der hier vorgestellte Ansatz bedeutet darüber hinaus ein großen Schritt in Richtung eines autonomen Fahrens (beispielsweise in Verbindung mit C2XKommunikation, C2X= car-to-x = Fahrzeug mit beliebigem Objekt x, z.B. Ampeln).

Ein weiterer Aspekt der Erfindung besteht somit darin, eine LDW/LKA-Funktion durch Verwendung von differentialem GPS mit Real-Time-Kinematik zu realisieren. Bei dieser Technologie wird ein GPS-Signal mit gemessenen Kinematik-Daten abgeglichen und korreliert, so dass eine Genauigkeit der Ortsbestimmung von 1 bis 5cm erreicht wird. Die Kinematik ist durch die Inertialsensorsignale gegeben. So kann im Airbag-Steuergerät aus den GPS-Signalen (als Fahrzeuggrobpositionssignal) und der Eigenbewegungsinformation der genaue Ort (differenzielles GPS-Signal als Fahrzeugfeinpositionssignal) beispielsweise mit Hilfe von Kalman-Filtern bestimmt werden. Zusammen mit der digitalen Karteninformation kann (vorzugsweise) im Airbag-Steuergerät festgestellt werden, ob und wann eine Fahrbahnmarkierung überfahren wird.

Beim LKA-System kann im Falle eines unbeabsichtigten Überfahrens beispielsweise die Lenkung aktiviert werden, um wieder die Spur zu halten. Bei LDW-Systemen wird der Fahrer beispielsweise gewarnt, analog zur bisherigen umgesetzten Funktion. Ein Vorteil bezüglich dem herkömmlichen LDW-/LKA-System ist bei dem hier vorgeschlagenen Ansatz in der Kosteneinsparung auf Systemseite bzw. der optimalen, an die verschiedenen Situationen angepassten Performance des Rückhaltesystems (in Bezug auf Sicherheit im der realen Umwelt, nicht nur für einen Crash-Test) zu sehen.

Es ergibt sich ferner auch noch ein Zusatznuten, wenn die Funktion im Airbag-Steuergerät umgesetzt wird. Vorzugsweise werden die Sicherheitsmittelrelevanten Funktionen im Airbag-Steuergerät umgesetzt, da hier direkte Synergien mit dem Airbag-Algorithmus genutzt werden können. Beim LDW-System besteht aufgrund der nun hohen Ortsauflösung (1 - 5cm) in Kombination mit dem digitalen Kartenmaterial die Möglichkeit, neben einer normalen Fahrerwarnung noch mehr Informationen zur Verfügung zu haben und diese vorteilhaft im Airbag-Auslösealgorithmus zu nutzen. In diesem Ausführungsbeispiel der Erfindung kann unterschieden werden, ob beispielsweise auf einer Landstraße (d.h. beispielsweise mit einer Fahrspur pro Fahrtrichtung) der Mittelstrich überfahren wird und folglich die Wahrscheinlichkeit für einen frontalen Car-to-Car-Crash mit Teilüberdeckung sehr hoch ist. Diese Erkenntnis kann dazu genutzt werden, beispielsweise einen Frontalairbag in eine erhöhte Alarmbereitschaft zu schalten oder es kann eine Änderung der Airbag-Auslöseschwelle für die Beschleunigungssignale oder ähnlicher Signale zur Auslösung des entsprechenden Airbags oder anderer Insassenschutzmittel durchgeführt werden.

Wenn aber erkannt wird, dass der seitliche Fahrbahnrand überfahren wird, so ist beispielswiese ein Pfahl-Crash (wie bei einem Baum) wahrscheinlicher als ein Frontalaufprall und es kann eine Anpassung der Airbag-Auslöseschwelle für die Beschleunigungssignale oder ähnliche Signale im Seitenairbag-Auslösealgorithmus ausgeführt werden. Alternativ kann die Alarmbereitschaft im Seitenairbag-Algorithmus überhaupt aktiviert werden. Da das digitale Kartenmaterial meist auch Höheninformationen über die Landschaft neben der Fahrbahn enthält, kann ein seitliches Abkommen von der Fahrbahn an einer Böschung ebenfalls erkannt werden, wobei die Überschlagwahrscheinlichkeit in dieser Fahrtsituation signifikant ansteigt. In diesem Falle kann dann die vorstehen beschriebene Algorithmus-Anpassung auch auf eine Anpassung der Auslösungsschwelle für ein Rollover-Sicherheitsmittel angewendet werden.

Beim Überfahren der mittleren Begrenzung auf einer Autobahn können eher die Sicherheitsmittel gegen einen Seitenaufprall aktiviert werden, da in einer solchen Situation wahrscheinlich ein "Entlangschlittern" an der Mittelleitplanke zu erwarten ist, möglicherweise in Verbindung mit einer anschließenden Fahrzeugdrehung (Schleudern), weshalb auch das ESP-System als Fahrzeugsteuerkomponente in einen erhöhten Aufmerksamkeitsmodus gebracht werden kann (beispielsweise kann eine Bremsen-Vorfüllung erfolgen oder die Bremsscheiben werden vorsorglich angelegt).

Erfolgt das Verlassen der Fahrbahn z.B. im Stadtbereich, wo über das Kartenmaterial ein Radweg und/oder breiter Fußweg identifiziert wird, so kann auch das aktive Fußgängerschutzsystem im Airbag-Steuergerät 120 vorkonditioniert/vorparametrisiert oder aktiviert werden. Neben der AlgorithmusVorspannung können natürlich alle möglichen Prepare-Funktionen adaptiv aktiviert werden, z.B. Sichposition, Fensterscheibe, aktive Frontstruktur, etc.

Ferner schafft die vorliegende Erfindung ein Verfahren 200 zur Bestimmung einer Position eines Fahrzeugs auf einer Fahrbahn, wie es in dem Ablaufdiagramm gemäß Fig. 2 dargestellt ist. Das Verfahren 200 umfasst einen Schritt des Empfangens 210 von Fahrzeuggrobkoordinaten aus zumindest einem empfangenen Satellitensignal, wobei die Fahrzeuggrobkoordinaten alleine aus Signalen von einem oder mehreren Satelliten eines Satellitenortungssystems bestimmt wurden;. Weiterhin umfasst das Verfahren 200 einen Schritt des Erhaltens 220 eines Inertialsignals, das eine Beschleunigung des Fahrzeugs im Wesentlichen horizontal zur Fahrbahn repräsentiert. Schließlich umfasst das Verfahren 200 einen Schritt des Ermittelns 230 von Fahrzeugfeinkoordinaten lediglich aus den empfangenen Fahrzeuggrobkoordinaten und dem erhaltenen Inertialsignal, um die Fahrzeugfeinkoordinaten zur Bestimmung der Position des Fahrzeugs auf der Fahrbahn zu verwenden.

## Patentansprüche

1. Verfahren (200) zur Bestimmung einer Position eines Fahrzeugs (100) auf einer Fahrbahn, wobei das Verfahren (200) einen Schritt des Empfangens (210) zumindest eines Satellitensignals von einem Satellitenortungssystem und Bestimmen von Fahrzeuggrobkoordinaten aus zumindest dem einen empfangenen Satellitensignal umfasst
**gekennzeichnet durch** die folgenden Schritte:
Erhalten (220) eines Inertialsignals, das eine Beschleunigung des Fahrzeugs (100) in eine Richtung im Wesentlichen horizontal zur Fahrbahn repräsentiert, wobei das Inertialsignal von einem Sensor (150a, 150b) erhalten wird, der mit einem Insassenschutzsystem (120, 160) gekoppelt ist;
Ermitteln (230) von Fahrzeugfeinkoordinaten auf der Basis der bestimmten Fahrzeuggrobkoordinaten und dem erhaltenen Inertialsignal, um die Fahrzeugfeinkoordinaten zur Bestimmung der Position des Fahrzeugs (100) auf der Fahrbahn zu verwenden;und
Auslesen von Fahrspurdaten über die Fahrbahn aus einer digitalen Straßenkarte (140) und Detektieren eines Fahrspurwechsels des Fahrzeugs (100), wobei der Schritt des Detektierens des Fahrspurwechsels unter Verwendung der Fahrspurdaten und der Fahrzeugfeinposition erfolgt.

2. Verfahren (200) gemäß Anspruch 1, **dadurch gekennzeichnet, dass** im Schritt des Detektierens eine Warnung an einen Fahrer (170) ausgegeben wird, wenn ein Fahrspurwechsel erkannt wird.

3. Verfahren (200) gemäß einem der Ansprüche 1 oder 2, **dadurch gekennzeichnet, dass** ferner ein Schritt des Aktivierens eines Insassenschutzmittels (160) vorgesehen ist, wenn im Schritt des Detektierens ein Fahrspurwechsel detektiert wird.

4. Verfahren (200) gemäß Anspruch 3, **dadurch gekennzeichnet, dass** im Schritt des Aktivierens dieses Aktivieren durch ein Verändern einer Auslöseschwelle für das Insassenschutzmittel (160) und/oder durch eine Freigabe für eine Auslösung des Insassenschutzmittels (160) erfolgt.

5. Verfahren (200) gemäß einem der Ansprüche 3 oder 4, **dadurch gekennzeichnet, dass** im Schritt des Detektierens ein Fahrspurwechsel in eine Fahrspur erkannt wird, die für Verkehr in einer zur Fahrtrichtung des Fahrzeugs (100) entgegengesetzten Richtung freigegeben ist und wobei im Schritt des Aktivierens ein Insassenschutzmittel (160) zum Schutz zumindest eines Insassen (170) gegen einen Frontaufprall aktiviert wird.

6. Verfahren (200) gemäß einem der vorangegangenen Ansprüche, **dadurch gekennzeichnet, dass** im Schritt des Detektierens ein Fahrspurwechsel von einer Fahrbahn in einen Fahrbahnseitenbereich erkannt wird, und wobei im Schritt des Aktivierens ein Insassenschutzmittel zum Schutz zumindest eines Insassen (170) gegen einen Seitenaufprall und/oder einen Fahrzeugüberschlag aktiviert wird.

7. Steuergerät (120), **dadurch gekennzeichnet, dass** das Steuergerätausgebildet ist, um die Schritte eines Verfahrens (200) gemäß einem der Ansprüche 1 bis 6 durchzuführen.

8. Computerprogrammprodukt mit Programmcode, **dadurch gekennzeichnet, dass** der Programmcode der auf einem maschinenlesbaren Träger gespeichert ist, zur Durchführung des Verfahrens (200) nach einem der Ansprüche 1 bis 6, wenn das Programm auf einem Steuergerät (120) ausgeführt wird.

## Claims

1. Method (200) for determining a position of a vehicle (100) on a carriageway, wherein the method (200) has a step of receiving (210) at least one satellite signal from a satellite locating system and determining coarse coordinates of the vehicle from at least the one received satellite signal,
**characterized by**
the following steps:
obtaining (220) an inertial signal which represents an acceleration of the vehicle (100) in an essentially horizontal direction with respect to the carriageway, wherein the inertial signal is obtained by a sensor (150a, 150b) which is coupled to a vehicle occupant protection system (120, 160);
determining (230) the vehicle fine coordinates on the basis of the determined coarse coordinates of the vehicle and the obtained inertial signal in order to use the vehicle fine coordinates to determine the position of the vehicle (100) on the carriageway; and
reading out lane data about the carriageway from a digital road map (140) and detecting a lane change of the vehicle (100), wherein the step of detecting the lane change is carried out using the lane data and the vehicle fine position.

2. Method (200) according to Claim 1, **characterized in that** in the detection step a warning is output to driver (170) if a lane change is detected.

3. Method (200) according to one of Claims 1 or 2, **characterized in that** in addition a step of activating a vehicle occupant protection means (160) is provided if a lane change is detected in the detection step.

4. Method (200) according to Claim 3, **characterized in that** in the activation step this activation is carried out by changing a triggering threshold for the vehicle occupant protection means (160) and/or by enabling triggering of the vehicle occupant protection means (160).

5. Method (200) according to one of Claims 3 or 4, **characterized in that** in the detection step a lane change into a lane which is enabled for traffic in a direction opposite to the direction of travel of the vehicle (100) is detected, and wherein in the activation step a vehicle occupant protection means (160) for protecting at least one occupant (170) against a head-on impact is activated.

6. Method (200) according to one of the preceding claims, **characterized in that** in the detection step a lane change from a carriageway into a carriageway side region is detected, and wherein in the activation step a vehicle occupant protection means for protecting at least one of the vehicle occupants (170) against a side impact and/or vehicle rollover of the vehicle is activated.

7. Control unit (120) **characterized in that** the control unit is designed to carry out the steps of a method (200) according to one of Claims 1 to 6.

8. Computer program product with program code, **characterized in that** the program code which is stored on a machine-readable carrier, to carry out the method (200) according to one of Claims 1 to 6, when the program is executed on a control unit (120).

## Revendications

1. Procédé (200) de détermination d'une position d'un véhicule (100) sur une chaussée, dans lequel le procédé (200) comprend une'étape consistant à recevoir (210) au moins un signal de satellite d'un système de positionnement par satellite et à déterminer des coordonnées approximatives du véhicule à partir de l'au moins un signal de satellite reçu,
**caractérisé par** les étapes consistant à :
obtenir (220) un signal d'inertie qui représente une accélération du véhicule (100) dans une direction sensiblement horizontale par rapport à la chaussée, dans lequel le signal d'inertie est obtenu par un capteur (150a, 150b) qui est couplé à un système de protection des occupants (120, 160) ;
déterminer (230) des coordonnées précises du véhicule sur la base des coordonnées approximatives déterminées du véhicule et du signal d'inertie obtenu, afin d'utiliser les coordonnées précises du véhicule pour déterminer la position du véhicule (100) sur la chaussée ; et
lire des données de voie concernant la chaussée à partir d'une carte routière numérique (140) et détecter un changement de voie du véhicule (100), dans lequel l'étape de détection du changement de voie s'effectue en utilisant les données de voie et la position précise du véhicule.

2. Procédé (200) selon la revendication 1, **caractérisé en ce que**, lors de l'étape de détection, une alarme est délivrée à un conducteur (170) lorsqu'un changement de voie est détecté.

3. Procédé (200) selon l'une quelconque des revendications 1 ou 2, **caractérisé en ce qu'**il est en outre prévu une étape consistant à activer un moyen de protection des occupants (160) lorsqu'un changement de voie est détecté lors de l'étape de détection.

4. Procédé (200) selon la revendication 3, **caractérisé en ce que**, lors de l'étape d'activation, ladite activation s'effectue par modification d'un seuil de déclenchement du moyen de protection des occupants (160) et/ou par autorisation d'un déclenchement du moyen de protection des occupants (160).

5. Procédé (200) selon l'une quelconque des revendications 3 ou 4, **caractérisé en ce que**, lors de l'étape de détection, un changement de voie est détecté sur une voie qui est autorisée à la circulation dans une direction opposée à la direction de conduite du véhicule (100) et dans lequel, lors de l'étape d'activation, un moyen de protection des occupants (160) est activé pour protéger au moins un occupant (170) d'une collision frontale.

6. Procédé (200) selon l'une quelconque des revendications précédentes, **caractérisé en ce que**, lors de l'étape de détection, un changement de voie est détecté d'une chaussée vers une zone latérale de la chaussée et dans lequel, lors de l'étape d'activation, un moyen de protection des occupants est activé pour protéger au moins un occupant (170) d'un choc latéral et/ou d'un retournement du véhicule.

7. Appareil de commande (120), **caractérisé en ce que** l'appareil de commande est conçu pour mettre en oeuvre les étapes d'un procédé (200) selon l'une quelconque des revendications 1 à 6.

8. Produit de programme informatique comportant un code de programme, **caractérisé en ce que** le code de programme qui est stocké sur un support lisible par machine, pour mettre en oeuvre le procédé (200) selon l'une quelconque des revendications 1 à 6 lorsque le programme est exécuté sur un appareil de commande (120).
